# EUROPEAN PATENT APPLICATION

(11) **EP 4 105 267 A1**
(43) Date of publication of application: **21.12.2022**
(21) Application number: 21179780.8
(22) Date of filing: 16.06.2021
(51) Int. Cl.: C08J 7/04, C08J 7/048, B32B 27/08, B32B 27/32, B32B 27/34, E04B 1/66

(54) **A SEALING ELEMENT WITH IMPROVED ADHESION TO CONCRETE AND METHOD FOR PRODUCING THEREOF**

(71) Applicant: Sika Technology AG, 6340 Baar (CH)
(72) Inventor: BULLONI, Matia, 6994 Aranno (CH); Z'ROTZ, Roy, 6030 Ebikon (CH); KATHRINER, Roger, 6010 Kriens (CH); DA RIN, Roman, 6020 Emmenbrücke (CH); FÄH, Christoph, 6010 Kriens (CH); KNIGHT, Carl, Medstead, Alton GU34 5EQ, Hampshire (GB); GÖSSI, Matthias, 8610 Uster (CH)
(74) Representative: Sika Patent Attorneys

(57) **Abstract**

The invention is directed to a method for producing a sealing element comprising a polymeric carrier layer and one or two functional coatings, wherein the functional coatings comprise a polymer and a filler and are formed by strewed one or more particle-based compositions to the surface of the polymeric carrier layer. The invention is also directed to a sealing element and to use of the sealing element.

## Description

### Technical field

The invention relates to sealing elements for use in the construction industry for sealing of below or above ground building constructions against penetration of water, moisture, harmful gases, or volatile organic compounds. In particular, the invention relates to sealing elements that fully and permanently bond to fresh cementitious compositions after hardening.

### Background Art

In the field of construction polymeric sheets, which are often referred to as membranes, panels, sheets, or liners, are used to protect underground and above ground constructions, such as base slabs, walls, floors, basements, tunnels, wet rooms, building facades, flat and low-sloped roofs, landfills, water-retaining structures, ponds, and dikes against penetration of water, moisture, harmful gases, and volatile organic compounds. Waterproofing membranes are applied, for example, to prevent ingress of water through cracks that develop in the concrete structure due to building settlement, load deflection or concrete shrinkage. Roofing membranes are used for sealing of flat and low-sloped roof structures to prevent leaks and to move take water off the roof.

Vapor retarders and barrier are used to control the movement of water through a building structure by vapor diffusion. Vapor retarding membranes are provided with different water vapor permeance properties or permeability and they are commonly provided as coatings or multilayer composites composed of several thin films or as structural vapor retarders. Waterproofing façade tapes are used for sealing of construction gaps in building facades, for example to seal gaps between a building structure and window or curtain wall components.

Waterproofing membranes are also used in heavy loaded commercial and residential wet rooms, shower rooms or therapy rooms in hospitals, and on balconies, terraces and in swimming pools to protect the structures against penetration of water. Geomembranes are used in contact with soil or rock to act as a barrier to passage of water and water-borne contaminants. Gas barriers are used for restricting the ingress of radon, volatile organic compounds (VOC), and carbon dioxide into buildings from landfill and naturally occurring sources. They are usually provided as plastic sheets comprising one or more barrier layers that prevent the passage of harmful gases. Gas barriers are typically used in ground floors above and below concrete slabs that are not subjected to hydrostatic pressure. Commercially available types of gas barriers include at least radon barrier membranes, liquid gas membranes, and self-adhesive gas membranes.

Membranes can be "post-applied" to an existing concrete structure or "pre-applied" before the structure to be sealed against penetration of water, moisture, and harmful gases has been formed. Post-applied membranes can be adhered to a surface of the substrate, for example, by using adhesive bonding means and/or by using sealing tapes. The adhesive can be applied during installation to a surface of the membrane and/ or to a surface of the substrate or self-adhering membranes having a factory applied layer of a pressure sensitive adhesive on the bottom surface of the membrane can be used. Pre-applied membranes are placed on the surface of the underlying concrete structure or formwork and fresh concrete is then cast against the upper surface of the membrane thereby fully and permanently bonding the membrane to the surface of the hardening concrete body. Post-applied and pre-applied membranes typically comprise a barrier layer providing the membrane with required barrier properties and in addition one or more further layers that are used to improve the mechanical properties of the membrane and/or to improve bonding with adhesives.

Polymeric materials having a low surface energy, such as polyolefin-based materials, are notoriously difficult to bond with adhesives that are commonly used in the field of construction industry, such as epoxy adhesives, polyurethane adhesives, and cementitious compositions. Therefore, a pre-applied waterproofing membrane typically comprises a contact layer or coating, such as a layer of non-woven material and/or a layer of pressure sensitive adhesive, to enable bonding with cementitious compositions. Patent application WO2010043661 A1 discloses a waterproofing membrane comprising a barrier layer and a composite layer, such as a layer of non-woven fabric, which is adhered to the barrier layer via a sealant layer. The disclosed waterproofing membrane has the disadvantage that the contact layer composed of the non-woven fabric and the sealant layer are not heat-weldable. Consequently, the seams formed between overlapped edges of adjacent membranes can only be sealed using sealing tapes and/or by adhesive means, which significantly increases the complexity of the installation process compared to heat-welding.

Another patent application WO2017108843 A1 discloses a waterproofing membrane having a barrier layer and a contact layer composed of a highly filed polymeric material that is operative to bond with cementitious composition. The membrane can be produced by die extruding or co-extruding compositions of the barrier and contact layers to obtain an extruded sealing element having sufficient interlayer peel strength between the barrier and contact layers. Due the high amount of solid fillers in the contact layer, the extrusion process requires use of specialized equipment, especially in case solid fillers with high abrasiveness, such as cement, is used as the solid filler component. Furthermore, the extrusion process disclosed in WO2017108843 A1 is especially suitable for producing membranes, where the thickness of the barrier layer is at least 0.35 mm, preferably at least 0.5 mm. However, polymeric membranes used as vapor or gas barriers or for waterproofing of wet rooms, balconies, and swimming pools, typically comprise a barrier layer having thickness of not more than 250 µm. Although producing multi-layer membranes having a total thickness of 250 µm or below using conventional flat die or cast extrusion techniques might be possible it is nevertheless challenging and certainly not a preferred alternative.

There is thus a need for a new method for producing polymeric membranes comprising a barrier layer and at least one layer that is operative to bond with cementitious compositions, wherein the applicability of the method is not limited by the thickness of the individual layers of the membrane.

### Summary of the invention

The objective of the present invention is to provide a method for producing sealing elements comprising a polymeric carrier layer and at least one layer that is operative to bond with cementitious compositions.

Another objective of the present invention is to provide a sealing element, which is suitable for protecting structures against penetration water, moisture, harmful gases, or volatile organic compounds and which fully and permanently bonds to fresh cementitious compositions after hardening.

It was surprisingly found that a sealing element comprising a polymeric carrier layer and a functional coating that is operative to bond with fresh cementitious compositions can be produced using a process, in which the functional coating is formed by strewing one or more particle-based compositions to the surface of the polymeric carrier layer.

The subject of the present invention is a method for producing a sealing element as defined in claim 1.

One of the advantages of the method of the present invention is that it enables providing multilayered sealing elements having a total thickness of not more than 250 µm, which sealing elements are especially suitable for use as waterproofing membranes in wet room applications, vapor and moisture barriers, or as gas barrier membranes.

Another advantage of the method of the present invention is that it enables simplified production of sealing elements, where the polymeric carrier layer is in form of a multilayer film comprising three or more separate layers and having a thickness total thickness of not more than 250 µm. Such sealing elements are very difficult to produce using conventional flat die- or cast extrusion processes.

Other subjects of the present invention are presented in other independent claims. Preferred aspects of the invention are presented in the dependent claims.

### Brief description of the Drawings

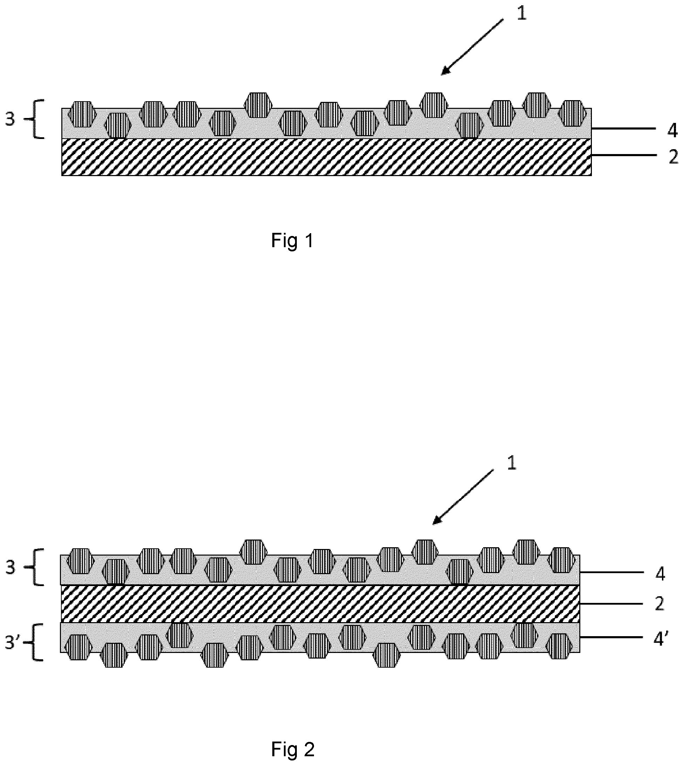

Fig. 1 shows a cross-section of a sealing element (1) of the present invention comprising a polymeric carrier layer (2) having a first and second primary exterior surfaces and a first functional coating (3) covering the first primary exterior surface of the polymeric carrier layer (2).
Fig. 2 shows a cross-section of a sealing element (1) of the present invention comprising a polymeric carrier layer (2) and a first functional coating (3) covering the first primary exterior surface of the polymeric carrier layer (2) and a second functional layer (3') covering the second primary exterior surface of the polymeric carrier layer (2).

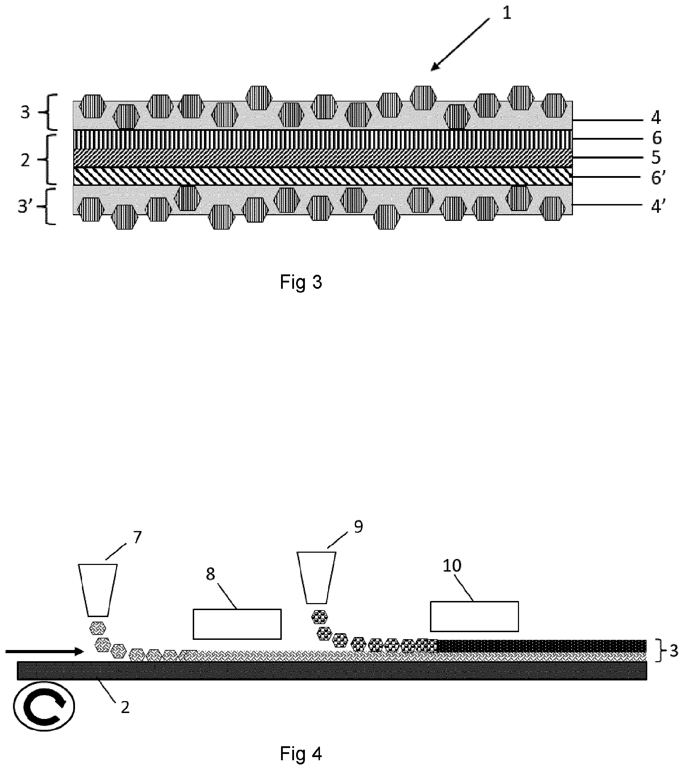

Fig. 3 shows a cross-section of a sealing element (1) according to one embodiment of the present invention comprising a polymeric carrier layer (2) and a first functional coating (3) covering the first primary exterior surface of the polymeric carrier layer (2) and a second functional layer (3') covering the second primary exterior surface of the polymeric carrier layer (2), wherein polymeric carrier layer (2) is composed of a barrier layer (5) and a first and a second outer layer (6, 6').
Fig. 4 shows a schematic presentation of one possible process for producing the sealing element (1) of the present invention.

### Detailed description of the invention

The subject of the present invention is a method for producing a sealing element comprising a polymeric carrier layer having a first and a second primary exterior surface and a first functional coating covering at least a portion of the first primary exterior surface of the polymeric carrier layer, wherein the first functional coating comprises a polymer component **P1** and a solid filler component **F1,** wherein the first functional coating is formed by strewing one or more particle-based compositions and subjecting at least one of the strewn layer(s) to a heat-treatment.

The term "polymer" refers to a collective of chemically uniform macromolecules produced by a polyreaction (polymerization, polyaddition, polycondensation) where the macromolecules differ with respect to their degree of polymerization, molecular weight, and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomers species are called terpolymers and quaterpolymers, respectively.

The term "polyolefin" refers in the present disclosure to homopolymers and copolymers obtained by polymerization of olefins optionally with other types of comonomers.

The term "a-olefin" designates an alkene having the molecular formula CₓH₂ₓ (x corresponds to the number of carbon atoms), which features a carbon-carbon double bond at the first carbon atom (a-carbon). Examples of α-olefins include ethylene, propylene, 1-butene, 2-methyl-1-propene (isobutylene), 1-pentene, 1-hexene, 1-heptene and 1-octene. For example, neither 1,3-butadiene, nor 2-butene, nor styrene are referred as "a-olefins" according to the present document.

The term "rubber" refers in the present disclosure to a polymer or a polymer blend, which is capable of recovering from large deformations, and which can be, or already is, modified to a state in which it is essentially insoluble (but can swell) in a boiling solvent, in particular xylene. Typical rubbers are capable of being elongated or deformed to at least 200% of their original dimension under an externally applied force, and will substantially resume the original dimensions, sustaining only small permanent set (typically no more than about 20%), after the external force is released. As used herein, the term "rubber" may be used interchangeably with the term "elastomer."

The term "melting temperature" refers to a temperature at which a material undergoes transition from the solid to the liquid state. The melting temperature (Tₘ) is preferably determined by differential scanning calorimetry (DSC) according to ISO 11357 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) designates the temperature above which temperature a polymer component becomes soft and pliable, and below which it becomes hard and glassy. The glass transition temperature is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one thermoplastic polymer" refers to the sum of the individual amounts of all thermoplastic polymers contained in the composition. For example, in case the composition comprises 20 wt.-% of at least one thermoplastic polymer, the sum of the amounts of all thermoplastic polymers contained in the composition equals 20 wt.-%.

The term "normal room temperature" refers to the temperature of 23 °C.

The sealing element produced by using the method of the present invention comprises a polymeric carrier layer and a functional coating formed by strewing one or more particle-based compositions and subjecting at least one of the strewn layer(s) to a heat-treatment. The term "particle-based composition" refers to a composition composed of particles whereas the expression "strewing" is understood to mean that the particles are deposited or scattered on a surface to form a discontinuous or continuous layer of particles.

The term "layer" refers in the present disclosure generally to a sheet-like element having first and second primary exterior surfaces, i.e. top and bottom surfaces, and a thickness defined there between. Preferably, a layer has a length and width of at least 5 times, more preferably at least 15 times, even more preferably at least 25 times, greater than the maximum thickness of the layer. The term "polymeric layer" refers in the present disclosure to a layer comprising a continuous phase composed of one or more polymers.

Preferably, at least one of the particle-based compositions used for forming the first functional coating comprises at least one constituent of the polymer component **P1** and at least one constituent of the filler component **F1** of the first functional layer.

The one or more particle-based compositions used in the strewing process can be provided as dry blends or master batches, i.e. as a physical mixture of the constituents of the particle-based composition, or as compounded particles obtained by compounding the constituents of the particle-based composition. A dry blend can be prepared by mixing the particles of the polymeric constituents with other constituents to produce a homogeneously mixed material. A particle-based composition in form of compounded particles can be produced, for example, by processing the constituents in a compounding extruder to pellets or granules, which can then be grinded reduce the particle size, if needed.

According to one or more embodiments, at least one of the particle-based compositions used for forming the first functional coating is composed of compounded particles comprising at least one constituent of the polymer component **P1** and at least one constituent of the filler component **F1** of the first functional layer. According to one or more embodiments, said compounded particles have been obtained by granulating a starting composition comprising at least one constituent of the polymer component **P1** and at least one constituent of the filler component **F1** using a compounding extruder and optionally grinding the granulates to reduce the particle size.

Preferably, the particle-based composition(s) used for forming the first functional layer are in form of powder, pellets or granules, preferably having a median particle size dso of 50 - 1500 µm, preferably 100 - 1250 µm, more preferably 150 - 1000 µm, even more preferably 200 - 1000 µm.

The term "particle size" refers in the present disclosure to the area-equivalent spherical diameter of a particle (Xarea). The term "median particle size dso" refers to a particle size below which 50 % of all particles by volume are smaller than the dso value. In analogy, the term d₉₀ particle size refers in the present disclosure to a particle size below which 90 % of all particles by volume are smaller than the d₉₀ value and term "d₁₀ particle size" refers to a particle size below which 10 % of all particles by volume are smaller than the d₁₀ value. A particle size distribution can be measured by laser diffraction according to the method as described in standard ISO 13320:2009 using a wet or dry dispersion method and for example, a Mastersizer 2000 device (trademark of Malvern Instruments Ltd, GB).

According to one or more preferred embodiments, the first functional coating comprises:
a1) 25 - 90 wt.-%, preferably 35 - 85 wt.-%, more preferably 45 - 85 wt.-%, even more preferably 55 - 80 wt.-%, of the polymer component **P1** and
b1) 5 - 70 wt.-%, preferably 10 - 60 wt.-%, more preferably 15 - 60 wt.-%, even more preferably 20 - 55 wt.-%, of the solid filler component **F1,** all proportions being based on the total weight of the first functional coating.

Suitable polymers used in the polymer component **P1** include, for example, polyvinylchloride, polyolefins, halogenated polyolefins, rubbers, and ethylene ketone esters.

Suitable polyolefins for use in the polymer component **P1** include ethylene-based polyolefins, for example, polyethylenes, and ethylene copolymers, such as copolymers of ethylene and one or more α-olefins, copolymers of ethylene and vinyl acetate, and copolymers of ethylene and acrylic esters. Further suitable polyolefins include propylene-based polyolefins, for example polypropylenes and propylene copolymers, such as copolymers propylene and one or more α-olefins.

Suitable rubbers for use in the polymer component **P1** include, for example, butyl rubber, halogenated butyl rubber, ethylene-propylene diene monomer rubber (EPDM), natural rubber, chloroprene rubber, synthetic 1,4-cis-polyisoprene, polybutadiene, ethylene propylene rubber (EPR), styrenebutadiene rubber (SBR), isoprene-butadiene copolymer, styrene-isoprene-butadiene rubber, methyl methacrylate-butadiene copolymer, methyl methacrylate-isoprene copolymer, acrylonitrile-isoprene copolymer, and acrylonitrile-butadiene copolymer.

According to one or more embodiment, the polymer component **P1** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyvinylchloride, polyethylene, ethylene α-olefin copolymers, ethylene acrylic ester copolymers, and ethylene vinyl acetate copolymers, even more preferably from the group consisting of polyethylene, ethylene α-olefin copolymers, ethylene acrylic ester copolymers, and ethylene vinyl acetate copolymers.

Suitable polyethylenes include, for example, very-low-density polyethylene, low-density polyethylene, linear low-density polyethylene, medium-density polyethylene, high-density polyethylene, and ultra-high-molecular-weight polyethylene, particularly low-density polyethylene, linear low-density polyethylene, medium-density polyethylene, high-density polyethylene.

Suitable ethylene α-olefin copolymers include random and block copolymers of ethylene and one or more C₃-C₂₀ α-olefin monomers, particularly one or more of propylene, 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of ethylene-derived units, based on the weight of the copolymer.

Suitable ethylene random copolymers include, for example, ethylene-based plastomers, which are commercially available, for example, under the trade name of Affinity^{®}, such as Affinity^{®} EG 8100G, Affinity^{®} EG 8200G, Affinity^{®} SL 8110G, Affinity^{®} KC 8852G, Affinity^{®} VP 8770G, and Affinity^{®} PF 1140G (all from Dow Chemical Company); under the trade name of Exact^{®}, such as Exact^{®} 3024, Exact^{®} 3027, Exact^{®} 3128, Exact^{®} 3131, Exact^{®} 4049, Exact^{®} 4053, Exact^{®} 5371, and Exact^{®} 8203 (all from Exxon Mobil); and under the trade name of Queo^{®} (from Borealis AG) as well as ethylene-based polyolefin elastomers (POE), which are commercially available, for example, under the trade name of Engage^{®}, such as Engage^{®} 7256, Engage^{®} 7467, Engage^{®} 7447, Engage^{®} 8003, Engage^{®} 8100, Engage^{®} 8480, Engage^{®} 8540, Engage^{®} 8440, Engage^{®} 8450, Engage^{®} 8452, Engage^{®} 8200, and Engage^{®} 8414 (all from Dow Chemical Company).

Suitable ethylene-α-olefin block copolymers include ethylene-based olefin block copolymers (OBC), which are commercially available, for example, under the trade name of Infuse^{®}, such as Infuse^{®} 9100, Infuse^{®} 9107, Infuse^{®} 9500, Infuse^{®} 9507, and Infuse^{®} 9530 (all from Dow Chemical Company).

Suitable copolymers of ethylene and vinyl acetate include those having a content of a structural unit derived from vinyl acetate in the range of 4 - 95 wt.-%, preferably 6 - 90 wt.-%, more preferably 8 - 90 wt.-%, based on the weight of the copolymer. Suitable ethylene and vinyl acetate bipolymers and terpolymers, such as ethylene vinyl acetate carbon monoxide terpolymers, are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), and under the trade name of Levapren^{®} (from Arlanxeo GmbH), and under the trade name of Elvaloy^{®} (from Dupont).

Suitable polypropylenes include, for example, isotactic polypropylene (iPP), syndiotactic polypropylene (sPP), and homopolymer polypropylene (hPP).

Suitable propylene copolymers include propylene-ethylene random and block copolymers and random and block copolymers of propylene and one or more C₄-C₂₀ α-olefin monomers, in particular one or more of 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of propylene-derived units, based on the weight of the copolymer.

Suitable propylene random and block copolymers are commercially available, for example, under the trade names of Intune^{®}, and Versify (from Dow Chemical Company) and under the trade name of Vistamaxx^{®} (from Exxon Mobil).

Further suitable propylene copolymers include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hiflex^{®}, Softell^{®}, and Hifax^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

According to one or more preferred embodiments, the polymer component **P1** comprises at least one ethylene vinyl acetate copolymer. It may be preferred that the at least one ethylene vinyl acetate copolymer comprises at least 15 wt.-%, more preferably at least 35 wt.-%, even more preferably at least 50 wt.-%, of the total weight of the polymer component **P1.** According to one or more embodiments, the at least one ethylene vinyl acetate copolymer comprises at least 65 wt.-%, preferably at least 75 wt.-%, more preferably at least 85 wt.-%, still more preferably at least 95 wt.-%, of the total weight of the polymer component **P1.**

According to one or more embodiments, the solid filler component **F1** comprises at least one inorganic filler, preferably selected from the group consisting of inert mineral fillers and mineral binders.

The term "inert mineral filler" refers in the present disclosure to mineral fillers, which, unlike mineral binders do not undergo a hydration reaction in the presence of water. Suitable mineral fillers to be used as the at least one inorganic filler include, for example, sand, granite, calcium carbonate, magnesium carbonate, clay, expanded clay, diatomaceous earth, pumice, mica, kaolin, dolomite, xonotlite, perlite, vermiculite, Wollastonite, barite, cristobalite, silica, fumed silica, fused silica, glass beads, hollow glass spheres, ceramic spheres, bauxite, comminuted concrete, and zeolites.

The term "mineral binder" refers in the present disclosure to mineral materials, which undergo a hydration reaction in the presence of water. Suitable mineral binders for use as the at least one inorganic filler include hydraulic binders, non-hydraulic binders, latent hydraulic binders, and pozzolanic binders.

According to one or more embodiments, the at least one inorganic filler comprises at least 50 wt.-%, preferably at least 75 wt.-%, more preferably at least 85 wt.-%, even more preferably at least 90 wt.-%, still more preferably at least 95 wt.-%, of the total weight of the solid filler component **F1.**

The thickness of the first functional coating is not particularly restricted, and it depends on the intended application of the sealing element. Preferably, the strewing rate of the particle-based compositions is adjusted such that the first functional coating has a mass per unit area of not more than 3500 g/m², more preferably not more than 2500 g/m². According to one or more embodiments, the first functional coating has a mass per unit area of 25 - 3000 g/m², preferably 50 - 2000 g/m², more preferably 75 - 1500 g/m², even more preferably 100 - 1000 g/m², still more preferably 100 - 750 g/m².

According to one or more embodiments, the sealing element further comprises a second functional coating covering at least a portion of the second primary exterior surface of the polymeric carrier layer, wherein the second functional coating comprises a polymer component **P2** and a solid filler component **F2,** wherein the second functional coating is formed by strewing one or more particle-based compositions and subjecting at least one of the strewn layers to a heat-treatment.

Preferably, at least one of the particle-based compositions used in forming the second functional coating comprises at least one constituent of the polymer component **P2** and at least one constituent of the filler component **F2** of the first functional layer.

According to one or more embodiments, at least one of the particle-based compositions used in forming the second functional coating is composed of compounded particles comprising at least one constituent of the polymer component **P2** and at least one constituent of the filler component **F2** of the second functional layer. According to one or more embodiments, said compounded particles have been obtained by granulating a starting composition comprising at least one constituent of the polymer component **P2** and at least one constituent of the filler component **F2** using a compounding extruder and optionally grinding the granulates to reduce the particle size.

Preferably, the particle-based composition(s) used for forming the second functional layer are in form of powder, pellets, or granules, preferably having a median particle size dso of 50 - 1500 µm, preferably 100 - 1250 µm, more preferably 150 - 1000 µm, even more preferably 200 - 1000 µm.

The preferences given above for the polymer component **P1** and the solid filler component **F1** of the first functional layer apply equally to the polymer component **P2** and the solid filler component **F2** of the second functional layer

According to one or more embodiments, the second functional coating comprises:
a2) 25 - 90 wt.-%, preferably 35 - 85 wt.-%, more preferably 45 - 85 wt.-%, even more preferably 55 - 80 wt.-%, of the polymer component **P2** and
b2) 5 - 70 wt.-%, preferably 10 - 60 wt.-%, more preferably 15 - 60 wt.-%, even more preferably 20 - 55 wt.-%, of the solid filler component **F2,** all proportions being based on the total weight of the second functional coating.

The thickness of the second functional coating is not particularly restricted, and it depends on the intended application of the sealing element. Preferably, the strewing rate of the particle-based compositions is adjusted such that the second functional coating has a mass per unit area of not more than 3500 g/m2, more preferably not more than 2500 g/m2. According to one or more embodiments, the second functional coating has a mass per unit area of 25 - 3000 g/m2, preferably 50 - 2000 g/m2, more preferably 75 - 1500 g/m2, even more preferably 100 - 1000 g/m2, still more preferably 100 - 750 g/m2.

According to one or more preferred embodiments, the method for producing a sealing element comprises steps of:
i) Strewing a first particle-based composition comprising at least one thermoplastic polymer **P11** to the first primary exterior surface of the polymeric carrier layer to form a first strewn layer,
ii) Optionally subjecting the first strewn layer to a heat treatment,
iii) Strewing a second particle-based composition comprising at least one thermoplastic polymer **P12** and at least one inorganic filler **F11** on top of the first strewn layer to form a second strewn layer, and
iv) Subjecting the second strewn layer to a heat-treatment.

In a heat treatment step, a strewn layer is preferably heated to an elevated temperature to melt at least a portion of the polymer material of the particle-based composition. During the heat-treatment, the deposited particles adhere to each other and eventually form a discontinuous or substantially continuous layer of material to the surface of the polymeric carrier layer. The heating of the strewn layers can be conducted using any conventional technique, such as heating in an oven, heating by air stream, or heating with infrared (IR)-radiation.

Preferably, the method comprises a further step of:
v) Cooling the sealing element obtained from step iv) to a temperature, which is at least 10 °C, preferably at least 15 °C, more preferably at least 25 °C below the melting points of the thermoplastic polymers **P11** and **P12.**

The strewing rates of the particle-based compositions depends on the desired coating weight and composition of the first functional layer and further on the constituents of the particle-based compositions. A skilled person is generally able to select the strewing rates such that the first functional layer has the preferred composition and coating weight as described above. It may, however, be advantageous that the first and second particle-based compositions are strewed at a rate of 5 - 1500 g/m², preferably 15 - 1000 g/m², more preferably 25 - 850 g/m², even more preferably 50 - 750 g/m².

According to one or more embodiments, the first particle-based composition is substantially free of the at least one inorganic filler **F11,** preferably substantially free of inorganic fillers. The expression "substantially free" is understood to mean the amount of the respective compound is less than 0.15 wt.-%, preferably less than 0.05 wt.-%, more preferably less than 0.01 wt.-%, based on the total weight of the composition.

According to one or more preferred embodiments, the second particle-based composition is composed of compounded particles comprising the at least one thermoplastic polymer **P12** and the at least one inorganic filler **F11.** According to one or more embodiments, said compounded particles have been obtained by granulating a starting composition comprising the at least one thermoplastic polymer **P12** and the at least one inorganic filler **F11,** using for example a compounding extruder, and optionally grinding the obtained granules to reduce the particle size.

The thermoplastic polymers **P11** and **P12** can be identical with each other. It has been, however, found out that it can be advantageous to use different types of polymers in the first and second particle-based compositions. Specifically, it has been found out that the thermoplastic polymer **P11** can be selected to provide good bonding with the polymeric carrier layer whereas the thermoplastic polymer **P12** can be selected to improve bonding of the first functional layer with fresh cementitious compositions.

According to one or more embodiments, the at least one thermoplastic polymer **P11** comprises at least one ethylene vinyl acetate copolymer, preferably having:
- a content of a structural unit derived from vinyl acetate of 5 - 65 wt.-%, more preferably 10 - 50 wt.-%, more preferably 10 - 40 wt.-%, even more preferably 10 - 30 wt.-%, based on the weight of the copolymer and/or
- melt flow rate determined according to ISO 1133-1:2011 (190 °C/2.16 kg) of at least 10 g/10 min, preferably at least 25 g/10 min, more preferably at least 50 g/10 min, particularly in the range of 35 - 300 g/10 min, preferably 65 - 250 g/10 min, more preferably 100 - 200 g/10 min and/or
- a melting temperature (Tₘ) determined by DSC according to ISO 11357-3:2018 standard of at or below 175 °C, preferably at or below 150 °C, particularly in the range of 50 - 135 °C, preferably 65 - 125 °C, more preferably 75 - 115 °C.

Generally, the expression "the at least one component X comprises at least one component XN", such as "the at least one thermoplastic polymer **P11** comprises at least one ethylene vinyl acetate copolymer" is understood to mean in the context of the present disclosure that a composition that comprises one or more ethylene vinyl acetate copolymers as representatives of the at least one thermoplastic polymer **P11.**

According to one or more embodiments, the at least one thermoplastic polymer **P12** comprises at least one soft ethylene vinyl acetate copolymer having:
- a content of a structural unit derived from vinyl acetate of 45 - 90 wt.-%, preferably 50 - 90 wt.-%, preferably 55 - 90 wt.-%, more preferably 60 - 90 wt.-%, even more preferably 65 - 85 wt.-%, based on the weight of the copolymer and/or
- A Mooney viscosity (ML 1+4 at 100°C) determined according to ISO 289:2005 of 1 - 100, preferably 5 - 85, more preferably 10 - 65, even more preferably 15 - 50.

According to one or more embodiments, the at least one thermoplastic polymer **P12** further comprises at least one hard ethylene vinyl acetate copolymer having:
- a content of a structural unit derived from vinyl acetate of 5 - 40 wt.-%, preferably 5 - 35 wt.-%, more preferably 10 - 35 wt.-%, even more preferably 10 - 30 wt.-%, based on the weight of the copolymer and/or
- a melt flow rate determined according to ISO 1133-1:2011 (190 °C/2.16 kg) of not more than 100 g/10 min, preferably not more than 50 g/10 min, more preferably not more than 25 g/10 min, particularly in the range of 1 - 75 g/10 min, preferably 1 - 50 g/10 min, more preferably 1 - 35 g/10 min, even more preferably 1 - 15 g/10 min and/or
- a melting temperature (Tₘ) determined by DSC according to ISO 11357-3:2018 standard of at or below 175 °C, preferably at or below 150 °C, particularly in the range of 50 - 135 °C, preferably 60 - 125 °C, more preferably 65 - 115 °C.

The second particle-based composition further comprises at least one inorganic filler **F11.**

Preferably, the at least one inorganic filler **F11** comprises at least one mineral binder and/or at least one inert mineral filler. The at least one mineral binder is preferably selected from the group consisting of hydraulic binders, non-hydraulic binders, latent hydraulic binders, and pozzolanic binders.

It may be preferred that in case the at least one inorganic filler **F11** comprises mineral binders, at least a portion of said mineral binders are in non-hydrated form. The expression "non-hydrated form" is understood to mean that the hydraulic binders have not been reacted in a hydration reaction. According to one or more embodiments, at least 50 wt.-%, more preferably at least 75 wt.-%, even more preferably at least 85 wt.-%, still more preferably at least 95 wt.-%, of the mineral binders of the at least one inorganic filler **F11** are in non-hydrated form.

Preferably, the at least one inorganic filler **F11** has a median particle size dso that is at least 25 %, preferably at least 50 %, more preferably at least 75 % smaller than the median particle size dso of the second particle-based composition. According to one or more embodiments, the at least one inorganic filler **F11** has a median particle size dso of 0.1 - 100 µm, preferably 0.15 - 50 µm, more preferably 0.15 - 25 µm, even more preferably 0.25 - 15 µm.

According to one or more embodiments, the at least one inorganic filler **F11** comprises at least one hydraulic binder.

The term "hydraulic binder" refers the present disclosure to an inorganic material or blend, which forms a paste when mixed with water, and which sets and hardens by a series of hydration reactions resulting in formation of solid mineral hydrates or hydrate phases, which are not soluble in water or have a very low water-solubility. Hydraulic binders, such as Portland cement, can harden and retain their strength even when exposed to water, for example underwater or under high humidity conditions. In contrast, the term "non-hydraulic binder" refers to substances, which harden by reaction with carbon dioxide and which, therefore, do not harden in wet conditions or under water.

Examples of suitable hydraulic binders include hydraulic cements, such as Portland cement, aluminate cement, calcium sulfoaluminate cement, and hydraulic lime.

The term "Portland cement" as used herein is intended to include those cements normally understood to be "Portland cements", particularly those described in European Standard EN-197. Portland cement consists mainly of tri-calcium silicate (alite) (C₃S) and dicalcium silicate (belite) (C₂S). Preferred Portland cements include the types CEM I, CEM II, CEM III, CEM IV, and CEM V compositions of the European standard EN 197-1:2018-11. However, all other Portland cements that are produced according to another standard, for example, according to ASTM standard, British (BSI) standard, Indian standard, or Chinese standard are also suitable.

According to one or more preferred embodiments, the at least one inorganic filler **F11** comprises a hydraulic cement, preferably a Portland cement.

According to one or more embodiments, the at least one inorganic filler **F11** comprises at least one non-hydraulic binder.

Examples of suitable non-hydraulic binders include air-slaked lime (non-hydraulic lime) and gypsum. The term "gypsum" refers in the present disclosure to any known form of gypsum, in particular calcium sulfate dehydrate, calcium sulfate α-hemihydrate, calcium sulfate β-hemihydrate, or calcium sulfate anhydrite or mixtures thereof.

According to one or more embodiments, the at least one inorganic filler **F11** comprises at least one latent hydraulic binder.

The term "latent hydraulic binder" refers in the present disclosure to type II concrete additives with a "latent hydraulic character" as defined in DIN EN 206-1:2000 standard. These types of mineral binders are calcium aluminosilicates that are not able to harden directly or harden too slowly when mixed with water.

The hardening process is accelerated in the presence of alkaline activators, which break the chemical bonds in the binder's amorphous (or glassy) phase and promote the dissolution of ionic species and the formation of calcium aluminosilicate hydrate phases.

Examples of suitable latent hydraulic binders include ground granulated blast furnace slag. Ground granulated blast furnace slag is typically obtained from quenching of molten iron slag from a blast furnace in water or steam to form a glassy granular product and followed by drying and grinding the glassy into a fine powder.

According to one or more embodiments, the at least one inorganic filler **F11** comprises at least one pozzolanic binder.

The term "pozzolanic binder" refers in the present disclosure to type II concrete additives with a "pozzolanic character" as defined in DIN EN 206-1:2000 standard. These types of mineral binders are siliceous or aluminosilicate compounds that react with water and calcium hydroxide to form calcium silicate hydrate or calcium aluminosilicate hydrate phases.

Examples of suitable pozzolanic binders include natural pozzolans, such as trass, and artificial pozzolans, such as fly ash and silica fume. The term "fly ash" refers in the present disclosure to the finely divided ash residue produced by the combustion of pulverized coal, which is carried off with the gasses exhausted from the furnace in which the coal is burned. The term "silica fume" refers in the present disclosure to fine particulate silicon in an amorphous form. Silica fume is typically obtained as a by-product of the processing of silica ores such as the smelting of quartz in a silica smelter which results in the formation of silicon monoxide gas and which on exposure to air oxidizes further to produce small particles of amorphous silica.

According to one or more embodiments, the at least one inorganic filler **F11** comprises at least one inert mineral filler.

Examples of suitable inert mineral filers include sand, granite, calcium carbonate, magnesium carbonate, clay, expanded clay, diatomaceous earth, pumice, mica, kaolin, talc, potash, dolomite, xonotlite, perlite, vermiculite, Wollastonite, barite, cristobalite, silica (quartz), fumed silica, fused silica, bauxite, comminuted (recycled) concrete, and zeolites.

According to one or more embodiments, the at least one inorganic filler **F11** comprises at least one inert mineral filler selected from the group consisting of sand, granite, calcium carbonate, magnesium carbonate, clay, expanded clay, diatomaceous earth, pumice, mica, kaolin, potash, dolomite, xonotlite, perlite, vermiculite, Wollastonite, barite, cristobalite, silica (quartz), fumed silica, fused silica, bauxite, comminuted concrete, and zeolites, preferably from the group consisting of calcium carbonate, magnesium carbonate, diatomaceous earth, pumice, mica, dolomite, xonotlite, perlite, vermiculite, Wollastonite, barite, and comminuted (recycled) concrete.

According to one or more embodiments, method for producing the sealing element comprises further steps of:
vi) Strewing a third particle-based composition comprising at least one thermoplastic polymer **P21** to the second primary exterior surface of the polymeric carrier layer to form a third strewn layer,
vii) Optionally subjecting the third strewn layer to heat-treatment,
viii) Strewing a fourth particle-based composition comprising at least one thermoplastic polymer **P22** and at least one inorganic filler **F21** on top of the third strewn layer to form a fourth strewn layer, and
ix) Subjecting the fourth strewn layer to a heat-treatment.

Preferably, the method comprises a further step of:
x) Cooling the sealing element obtained from step ix) to a temperature, which is at least 10 °C, preferably at least 15 °C, more preferably at least 25 °C, below the melting points of the thermoplastic polymers **P21** and **P22.**

The strewing rates of the third and fourth particle-based compositions depends on the desired coating weight and composition of the second functional layer and on the constituents of the particle-based compositions. A skilled person is generally able to select the strewing rates such that the second functional layer has the preferred composition and coating weight as described above. It may, however, be advantageous that the third and fourth particle-based compositions are strewed at a rate of 5 - 1500 g/m², preferably 15 - 1000 g/m², more preferably 25 - 850 m², even more preferably 50 - 750 m².

According to one or more embodiments, the third particle-based composition is substantially free of the at least one inorganic filler **F21,** preferably substantially free of inorganic fillers.

According to one or more preferred embodiments, the fourth particle-based composition is composed of compounded particles comprising the at least one thermoplastic polymer **P21** and the at least one inorganic filler **F21.** According to one or more embodiments, said compounded particles have been obtained by granulating a starting composition comprising the at least one thermoplastic polymer **P21** and the at least one inorganic filler **F21,** for example by using a compounding extruder, and optionally grinding the obtained granules to reduce the particle size.

The thermoplastic polymers **P21** and **P22** can be identical with each other. It has been, however, found out that can be advantageous to use different types of polymers in the third and fourth particle-based compositions. Specifically, it has been found out that the thermoplastic polymer **P21** is preferably selected to provide good bonding with the polymeric carrier layer whereas the thermoplastic polymer **P22** is preferably selected to improve bonding with fresh cementitious compositions.

Generally, the preferences given above for at least one thermoplastic polymer **P11** and **P12** and to the at least one inert mineral filler **F11** apply equally to the at least one thermoplastic polymer **P21** and **P22** and to the at least one inert mineral filler **F21,** respectively.

According to one or more embodiments, the at least one thermoplastic polymer **P21** is identical with the at least one thermoplastic polymer **P11** and/or the at least one thermoplastic polymer **P22** is identical with the at least one thermoplastic polymer **P12** and/or the at least one inorganic filler **F21** is identical with the at least one inorganic filler **F11.**

The first, second, third, and fourth particle-based compositions may further contain one or more additives such as UV- and heat stabilizers, antioxidants, plasticizers, flame retardants, dyes, pigments such as titanium dioxide and carbon black, matting agents, antistatic agents, impact modifiers, biocides, and processing aids such as lubricants, slip agents, antiblock agents, and denest aids. It is however, preferred that the total amount of these types of additives comprises not more than 10 wt.-%, preferably not more than 5 wt.-%, of the total weight of the respective particle-based composition.

The preferred thickness of the polymeric carrier layer depends on the intended application of the sealing element. However, it may be preferred that the thickness of the polymeric carrier layer is not more than 10 mm, more preferably not more than 5 mm. According to one or more embodiments, the polymeric carrier layer has a thickness of 0.01 - 10 mm, preferably 0.025 - 5 mm, more preferably 0.05 - 3.5 mm. The thickness of a polymeric layer is preferably measured using the method as defined in DIN EN 1849-2 standard using an optical microscope, such as of type Keyence VHX-600 with 30-fold magnification.

According to one or more further embodiments, the polymeric carrier layer has a thickness of 10 - 500 µm, preferably 25 - 450 µm, more preferably 50 - 400 µm, even more preferably 50 - 350 µm, still more preferably 75 - 300 µm, most preferably 100 - 250 µm. Sealing elements comprising a polymeric carrier layer having a thickness in the above cited ranges have been found out to be especially suitable for use as vapor and moisture barriers, gas barrier membranes, such as radon, carbon dioxide, and methane barriers, volatile organic compound (VOC) barrier membranes, or as waterproofing membranes.

According to one or more further embodiments, the polymeric carrier layer has a thickness of 0.55 - 5 mm, preferably 0.65 - 3.5 mm, more preferably 0.75 - 3 mm, even more preferably 0.85 - 3 mm, still more preferably 1 - 2.5 mm. Sealing elements comprising a polymeric carrier layer having a thickness in the above cited ranges have been found out to be especially suitable for use as waterproofing and roofing membranes.

The method for producing a sealing element of the present invention can be conducted as a batch process or as continuous process. In the first case, a sheet of the polymeric carrier layer is laid on a static underlay and the particle-based compositions are then consecutively strewed to the surface of the polymeric carrier layer to form the strewn layers, at least one of which subjected to a heat-treatment. Strewing of the particles can be conducted, for example, using hand-held sieves or an industrial scale powder coating apparatus. Furthermore, the sealing element can be produced as a continuous membrane product using a powder coating line arrangement comprising means for conveying the polymeric carrier layer from an unwinder through a powder coating section comprising one or more strewing and heat-treatment stations.

Figure 4 shows a schematic presentation of one embodiment of the method for producing the sealing element (1) of the present invention. In this embodiment, a first particle-based composition is strewed onto a surface of a polymeric carrier layer (2) using a first strewing apparatus (7). The first strewn layer composed of the first particle-based composition is then subjected to a heat-treatment using a first heat source (8), for example infrared heating means and/or a hot air heating means. A second particle-based composition is then strewed on top of the first strewn layer using a second strewing apparatus (9). The second strewn layer composed of the second particle-based composition is then subjected to a heat-treatment using a second heat source (10), such as infrared heating means and/or a hot air heating means. The sealing element (1) can eventually be wound up into a roll, for example by using a winding device (not shown).

The preferences given above for the polymeric carrier layer, the first and second functional layers, the polymer components **P1** and **P2** and the solid filler components **F1** and **F2** apply equally to all subjects of the present invention unless stated otherwise.

Another subject of the present invention is a sealing element (1) comprising a polymeric carrier layer (2) having an upper and a lower primary exterior surface and a first functional coating (3) covering at least a portion of the first primary exterior surface of the polymeric carrier layer (2), wherein the first functional coating (3) comprises a polymer component **P1** and a solid filler component **F1** and wherein the first functional coating (3) has been obtained by strewing one or more particle-based compositions and subjecting at least one of the strewn layer(s) to a heat-treatment.

Preferably, the first functional coating comprises a first polymer matrix (4) comprising the polymer component **P1,** wherein a portion of the particles of the solid filler component **F1** are only partially embedded into the first polymer matrix (4), as shown in Figures 1-3. The term "polymer matrix" refers in the present disclosure to a polymeric material, which forms a continuous phase for dispersed and/or embedded solid particles.

According to one or more preferred embodiments, the first functional coating (3) comprises:
a1) 25 - 90 wt.-%, preferably 35 - 85 wt.-%, more preferably 45 - 85 wt.-%, even more preferably 55 - 80 wt.-%, of the polymer component **P1** and
b1) 5 - 70 wt.-%, preferably 10 - 60 wt.-%, more preferably 15 - 60 wt.-%, even more preferably 20 - 55 wt.-%, of the solid filler component **F1,** all proportions being based on the total weight of the first functional coating (3).

Preferably, at least one of the particle-based compositions used in forming the first functional coating (3) comprises at least one constituent of the polymer component **P1** and at least one constituent of the filler component **F1** of the first functional layer (3).

According to one or more embodiments, at least one of the particle-based compositions used in forming the first functional coating (3) is composed of compounded particles comprising at least one constituent of the polymer component **P1** and at least one constituent of the filler component **F1** of the first functional layer (3). According to one or more embodiments, said compounded particles have been obtained by granulating a starting composition comprising at least one constituent of the polymer component **P1** and at least one constituent of the solid filler component **F1,** for example by using a compounding extruder, and optionally grinding the obtained granules to reduce the particle size.

According to one or more embodiments, the first functional coating (3) has a mass per unit area of 25 - 3000 g/m², preferably 50 - 2000 g/m², more preferably 75 - 1500 g/m², even more preferably 100 - 1000 g/m², still more preferably 100 - 750 g/m².

According to one or more preferred embodiments, the polymer component **P1** comprises at least one ethylene vinyl acetate copolymer.

According to one or more embodiments, the at least one ethylene vinyl acetate copolymer comprises at least 15 wt.-%, preferably at least 35 wt.-%, more preferably at least 50 wt.-%, even more preferably at least 75 wt.-%, still more preferably at least 85 wt.-%, most preferably at least 95 wt.-%, of the total weight of the polymer component **P1.**

According to one or more embodiments, the polymer component **P1** comprises at least one soft ethylene vinyl acetate copolymer having:
- a content of a structural unit derived from vinyl acetate of 45 - 90 wt.-%, preferably 50 - 90 wt.-%, preferably 55 - 90 wt.-%, more preferably 60 - 90 wt.-%, even more preferably 65 - 85 wt.-%, based on the weight of the copolymer and/or
- A Mooney viscosity (ML 1+4 at 100°C) determined according to ISO 289:2005 of 1 - 100, preferably 5 - 85, more preferably 10 - 65, even more preferably 15 - 50.

According to one or more embodiments, the polymer component **P1** further comprises at least one hard ethylene vinyl acetate copolymer having:
- a content of a structural unit derived from vinyl acetate of 5 - 40 wt.-%, preferably 5 - 35 wt.-%, more preferably 10 - 35 wt.-%, even more preferably 10 - 30 wt.-%, based on the weight of the copolymer and/or
- a melt flow rate determined according to ISO 1133-1:2011 (190 °C/2.16 kg) of not more than 100 g/10 min, preferably not more than 50 g/10 min, more preferably not more than 25 g/10 min, particularly in the range of 1 - 75 g/10 min, preferably 1 - 50 g/10 min, more preferably 1 - 35 g/10 min, even more preferably 1 - 15 g/10 min and/or
- a melting temperature (Tₘ) determined by DSC according to ISO 11357-3:2018 standard of at or below 175 °C, preferably at or below 150 °C, particularly in the range of 50 - 135 °C, preferably 60 - 125 °C, more preferably 65 - 115 °C.

Preferably, the particles of the solid filler component **F1** have a median particle size dso of not more than 500 µm, more preferably not more than 350 µm, even more preferably not more than 250 µm, still more preferably not more than 150 µm. According to one or more embodiments, the particles of the solid filler component **F1** have a median particle size dso of 0.1 - 100 µm, preferably 0.15 - 50 µm, more preferably 0.15 - 25 µm, even more preferably 0.25 - 15 µm.

According to one or more embodiments, the solid filler component **F1** comprises at least one mineral binder, preferably selected from the group consisting of hydraulic binders, non-hydraulic binders, latent hydraulic binders, and pozzolanic binders.

According to one or more embodiments, the solid filler component **F1** comprises at least one hydraulic binder, preferably hydraulic cement, more preferably a Portland cement. According to one or more embodiments, the at least one hydraulic binder comprises at least 25 wt.-%, preferably at least 50 wt.-%, more preferably at least 75 wt.-%, even more preferably at least 95 wt.-%, of the total weight of the solid filler component **F1.**

According to one or more embodiments, the solid filler component **F1** comprises at least one non-hydraulic binder. According to one or more embodiments, the at least one non-hydraulic binder comprises at least 5 wt.-%, preferably at least 15 wt.-%, more preferably at least 25 wt.-%, even more preferably at least 35 wt.-%, still more preferably at least 50 wt.-%, of the total weight of the solid filler component **F1.**

According to one or more embodiments, the solid filler component **F1** comprises at least one latent hydraulic binder. According to one or more embodiments, the at least one latent hydraulic binder comprises at least 5 wt.-%, preferably at least 15 wt.-%, more preferably at least 25 wt.-%, even more preferably at least 35 wt.-%, still more preferably at least 50 wt.-%, of the total weight of the solid filler component **F1.**

According to one or more embodiments, the solid filler component **F1** comprises at least one pozzolanic binder. According to one or more embodiments, the at least one pozzolanic binder comprises at least 5 wt.-%, preferably at least 15 wt.-%, more preferably at least 25 wt.-%, even more preferably at least 35 wt.-%, still more preferably at least 50 wt.-%, of the total weight of the solid filler component **F1.**

According to one or more embodiments, the solid filler component **F1** comprises at least one inert mineral filler, preferably selected from the group consisting of sand, granite, calcium carbonate, magnesium carbonate, clay, expanded clay, diatomaceous earth, pumice, mica, kaolin, potash, dolomite, xonotlite, perlite, vermiculite, Wollastonite, barite, cristobalite, silica (quartz), fumed silica, fused silica, bauxite, comminuted (recycled) concrete, and zeolites, preferably from the group consisting of calcium carbonate, magnesium carbonate, diatomaceous earth, pumice, mica, dolomite, xonotlite, perlite, vermiculite, Wollastonite, barite, and comminuted (recycled) concrete.

According to one or more embodiments, the at least one inert mineral filler comprises at least 25 wt.-%, preferably at least 50 wt.-%, more preferably at least 75 wt.-%, even more preferably at least 95 wt.-%, of the total weight of the solid filler component **F1.**

According to one or more embodiments, the sealing element further comprises a second functional coating (3') covering at least a portion of the second primary exterior surface of the polymeric carrier layer (2), wherein the second functional coating (3') comprises a polymer component **P2** and a solid filler component **F2** and wherein the second functional coating (3') has been obtained by strewing one or more particle-based compositions and subjecting at least one of the strewn layer(s) to a heat-treatment.

Preferably, the second functional coating (3) comprises a second polymer matrix (4') comprising the polymer component **P2,** wherein a portion of the particles of the solid filler component **F2** are only partially embedded into the second polymer matrix (4'), as shown in Figure 2.

The first and second polymer matrixes (4, 4') are preferably not tacky to touch at a temperature of 23 °C. Whether a material is "tacky to the touch" at a specific temperature can be easily determined by pressing the surface of the material at the specific temperature with a finger. In doubtful cases, the "tackiness" can be determined by spreading powdered chalk on the surface of the material at the specific temperature and subsequently tipping the surface so that the powdered chalk falls off. If the residual powdered chalk remains visibly adhering to the surface, the material is considered tacky at the specific temperature.

According to one or more embodiments, the first and second contact coatings (3, 3') have a loop tack adhesion to a glass plate measured at a temperature of 23 °C of not more than 1.0 N/25 mm, preferably not more than 0.5 N/25 mm, more preferably not more than 0.1 N/25 mm, even more preferably 0 N/25 mm. The loop tack adhesion can be measured using a "FINAT test method no. 9 (FTM 9) as defined in FINAT Technical Handbook, 9th edition, published in 2014.

According to one or more preferred embodiments, the second functional coating (3') comprises:
a2) 25 - 90 wt.-%, preferably 35 - 85 wt.-%, more preferably 45 - 85 wt.-%, even more preferably 55 - 80 wt.-%, of the polymer component **P2** and
b2) 5 - 70 wt.-%, preferably 10 - 60 wt.-%, more preferably 15 - 60 wt.-%, even more preferably 20 - 55 wt.-%, of the solid filler component **F2,** all proportions being based on the total weight of the second functional coating (3').

Preferably, at least one of the particle-based compositions used for forming the second functional coating (3') comprises at least one constituent of the polymer component **P2** and at least one constituent of the filler component **F2** of the second functional layer (3').

According to one or more embodiments, at least one of the particle-based compositions used in forming the second functional coating (3') is composed of compounded particles comprising at least one constituent of the polymer component **P2** and at least one constituent of the filler component **F2** of the second functional layer (3'). According to one or more embodiments, said compounded particles have been obtained by granulating a starting composition comprising at least one constituent of the polymer component **P2** and at least one constituent of the solid filler component **F2,** for example by using a compounding extruder, and optionally grinding the obtained granules to reduce the particle size.

According to one or more embodiments, the second functional coating (3') has a mass per unit area of 25 - 3000 g/m², preferably 50 - 2000 g/m², more preferably 75 - 1500 g/m², even more preferably 100 - 1000 g/m², still more preferably 100 - 750 g/m².

The preferences given above for the polymer component **P1** and the solid filler component **F1** of the first functional layer apply equally to the polymer component **P2** and the solid filler component **F2** of the second functional layer

Preferably, the particle-based composition(s) used for forming the first and second functional coatings (3, 3') are in form of powder, granules, or pellets, preferably having a median particle size dso of 50 - 1500 µm, preferably 100 - 1250 µm, more preferably 150 - 1000 µm, even more preferably 200 - 1000 µm.

The preferred thickness of the polymeric carrier layer (2) depends on the intended application of the sealing element. However, it may be preferred that the thickness of the polymeric carrier layer (2) is not more than 10 mm, more preferably not more than 5 mm. According to one or more embodiments, the polymeric carrier layer has a thickness of 0.01 - 10 mm, preferably 0.05 - 5 mm, more preferably 0.05 - 3.5 mm.

According to one or more further embodiments, the polymeric carrier layer (2) has a thickness of 10 - 500 µm, preferably 25 - 450 µm, more preferably 50 - 400 µm, even more preferably 50 - 350 µm, still more preferably 75 - 300 µm, most preferably 100 - 250 µm. Sealing elements comprising a polymeric carrier layer having a thickness in the above cited ranges have been found out to be especially suitable for use as vapor and moisture barriers, gas barrier membranes, such as radon, carbon dioxide, and methane barriers, volatile organic compound (VOC) barrier membranes, or as waterproofing membranes.

According to one or more further embodiments, the polymeric carrier layer (2) has a thickness of 0.55 - 5 mm, preferably 0.65 - 3.5 mm, more preferably 0.75 - 3 mm, even more preferably 0.85 - 3 mm, still more preferably 1 - 2.5 mm. Sealing elements comprising a polymeric carrier layer having a thickness in the above cited ranges have been found out to be especially suitable for use as waterproofing and roofing membranes.

There are no strict limitations for the width and length of the polymeric carrier layer, and these depend on the intended use of the sealing element. The term "width" and "length" refer to the two perpendicular dimensions measured in the horizontal plane of the first and second major surfaces of a sheet-like element. Generally, the "width" of a sheet like element is the smaller of the horizontal dimensions of the sheet-like element. Consequently, the "width" of the polymeric carrier layer refers to the minor dimension measured in the horizontal plane of the polymeric carrier layer in a direction perpendicular to the length of the polymeric carrier layer.

According to one or more embodiments, the sealing element is provided in form of a broad sheet, wherein the polymeric carrier layer has a width in the range of 0.75 - 5 m, preferably 0.85 - 3.5 m, more preferably 1 - 2.5 m. According to one or more further embodiments, the sealing element is provided in form of a narrow strip, wherein the polymeric carrier layer has a width in the range of 10 - 500 mm, preferably 50 - 350 mm, more preferably 75 - 300 mm.

The sealing element of the present invention is typically provided in form of a prefabricated article, which is delivered to the construction site in form of rolls, which are then unwounded and cut to provide sheet-like articles having length of several times the width.

The composition of the polymeric carrier layer (2) is not particularly restricted, and it mainly depends on the intended application of the sealing element. Generally, the polymeric carrier layer (2) should provide resistance to environmental influences and should not decompose or be mechanically damaged even under prolonged influence of water or moisture.

It is furthermore preferred that the polymeric carrier layer (2) is in the form of a flexible layer. This allows the sealing element to be wound into rolls, typically during production, and then easily applied to a surface of a substrate to be protected. Preferably, the polymeric carrier layer (2) has a tensile modulus of elasticity determined according to EN ISO 527-3 of not more than 1000 MPa, preferably not more than 750 MPa, more preferably not more than 500 MPa, even more preferably not more than 350 MPa, still more preferably not more than 250 MPa.

Preferably, the polymeric carrier layer (2) comprises at least one film comprising at least one polymer **P3** selected from the group consisting of polyvinylchloride, polyolefins, halogenated polyolefins, rubbers, and ketone ethylene esters.

Suitable polyolefins and rubbers for use as the at least one polymer **P3** include the ones presented suitable for use in the polymer component **P1** of the first functional layer.

According to one or more embodiments, the at least one polymer **P3** has:
- a melting temperature (Tₘ) determined by DSC according to ISO 11357 standard in the range of 55 - 250 °C, preferably 60 - 200 °C, more preferably 65 - 175 °C, even more preferably 65 - 165 °C, still more preferably 70 - 155 °C and/or
- a glass transition temperature (T_{g}) determined by dynamical mechanical analysis (DMA) as the peak of the measured loss modulus (G") curve using an applied frequency of 1 Hz and a strain level of 0.1 % of at or below 0 °C, preferably at or below -10 °C, more preferably at or below -20 °C, even more preferably at or below -25 °C, still more preferably at or below -30 °C.

According to one or more embodiment, the at least one polymer **P3** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

The at least one film of the polymeric carrier layer (2) may further contain one or more additives such as UV- and heat stabilizers, antioxidants, plasticizers, flame retardants, dyes, pigments such as titanium dioxide and carbon black, matting agents, antistatic agents, impact modifiers, biocides, and processing aids such as lubricants, slip agents, antiblock agents, and denest aids. It is however, preferred that the total amount of these types of additives comprises not more than 45 wt.-%, preferably not more than 35 wt.-%, of the total weight of the at least one film.

The at least one film of the polymeric carrier layer (2) can be provided by using any conventional techniques known to a person skilled in the art, including for example, blown extrusion, flat die extrusion, cast extrusion, and calendaring techniques.

According to one or more embodiments, the polymeric carrier layer (2) is a multilayer foil comprising a barrier layer (5) comprising at least one polymer **P4** selected from the group consisting of ethylene vinyl alcohol, polyamide, and polyester and a first outer layer (6) comprising at least one polymer **P5** selected from the group consisting of polyvinylchloride, polyolefins, halogenated polyolefins, rubbers, and ketone ethylene esters. One embodiment of a sealing element comprising a polymeric carrier layer (2) and first and second functional coatings (3, 3'), wherein the polymeric carrier layer (2) is a multilayer foil is shown in Figure 3.

Sealing elements containing a multilayer foil as the polymeric carrier layer with a barrier layer comprising the at least one polymer **P4** are especially suitable for use as gas barrier membranes, such as radon, carbon dioxide, and methane barriers and volatile organic compound (VOC) barrier membranes.

Preferably, the at least one polymer **P4** comprises at least 35 wt.-%, preferably at least 55 wt.-%, more preferably at least 75 wt.-%, even more preferably at least 85 wt.-%, of the total weight of the barrier layer (5) and/or the at least one polymer **P5** comprises at least 35 wt.-%, preferably at least 55 wt.-%, more preferably at least 75 wt.-%, even more preferably at least 85 wt.-%, of the total weight of the first outer layer (6).

The term "ethylene vinyl alcohol (EVOH)" refers in the present disclosure to copolymers of vinyl alcohol and ethylene. Suitable ethylene vinyl alcohols can be obtained, for example, by hydrolyzation of ethylene vinyl acetate copolymers or by chemical reaction of ethylene monomers with vinyl alcohol.

Suitable ethylene vinyl alcohols to be used as the at least one polymer **P4** have:
- a molar content of ethylene comonomers in the range of 10 - 75 mol.-%, preferably 15 - 65 mol.-% and/or
- a hydrolyzation degree of at least 35 %, preferably at least 50 %, more preferably at least 75 %, in case the ethylene vinyl alcohol has been obtained by hydrolyzation of ethylene vinyl acetate copolymers.

Suitable ethylene vinyl alcohols are commercially available, for example, under the trade names of Soarnol^{®} (from Mitsubishi Chemicals) and Eval^{®} (from Kuraray).

Suitable polyamides to be used as the at least one polymer **P4** include aromatic and aliphatic crystalline and semi-crystalline polyamides. Amorphous polyamides are generally not preferred. The term "amorphous polyamide" refers here to polyamides that lack a crystalline melting point (Tₘ) as determined by differential scanning calorimetric (DSC) or an equivalent technique. Amorphous polyamides are distinct from the crystalline or semi-crystalline polyamides, such as Nylon 6 and Nylon 12.

Suitable polyamides include, for example, homo polyamides, such as Nylon 6 (PA6), which is synthetized by ring-opening polymerization of caprolactam; Nylon 6-6 (PA66), which is synthesized by polycondensation of hexamethylenediamine and adipic acid; and Nylon 12 (PA12), which can be synthetized either by polycondensation of ω-aminolauric acid or by ring-opening polymerization of laurolactam. Bioplastic polyamides, such as Nylon 11, which is synthetized by polymerization of 11-aminoundecanoic acid, are also suitable. Further suitable are aliphatic and aromatic co-polyamides, such as copolymers of PA6 and isophorone diisocyanate (IPDI).

Suitable polyamides are commercially available, for example, under the trade name of Grivory^{®} (from EMS Chemie), such as Grivory^{®} G16 and G21, which are copolyamides having both linear aliphatic units and ring-like aromatic components; under the trade name of Versamid^{®} (from Gabriel Performance Products), such as Versamid^{®} 100, which is an aliphatic polyamide; under the trade name of Rilsan (from Arkema), such as Rilsan^{®} TMNO TLD, Rilsan^{®} BMNO TLD, and Rilsamid^{®} AMNO TLD; under the trade name of Vestamid^{®} (from Evonik); and under the trade name of ^{®}Durethan (from Lanxess), such as Durethan C 38F.

Suitable polyesters for use as the at least one polymer **P4** include, for example, poly(ethylene terephthalate) (PET) and poly(butylene terephthalate) (PBT).

Especially suitable poly(ethylene terephthalate)s to be used as the at least one polymer **P4** have:
- a high content of ethylene terephthalate units, such as at least 90 wt.-%, preferably at least 95 wt.-%, more preferably at least 97.5 wt.-%, based on the weight of the poly(ethylene terephthalate) and/or
- a low content of dioxyethylene terephthalate units, such as not more than 10 wt.-%, preferably not more than 5 wt.-%, more preferably not more than 2.5 wt.-%, based on the weight of the poly(ethylene terephthalate) and/or
- a melting temperature (Tₘ) determined by differential scanning calorimetry (DSC) according to ISO 11357-3 standard using a heating rate of 2 °C/min of at or above 200 °C, preferably at or above 225 °C, more preferably at or above 250 °C.

Suitable poly(ethylene terephthalate)s are commercially available, for example, under the trade name of Vituf ^{®} (from Goodyear Chemical Company); under the trade name of Impet^{®} (from Celanese), and under the trade name of Mylar^{®} (from Dupont).

According to one or more embodiments, the at least one polymer **P4** is selected from the group consisting of ethylene vinyl alcohol copolymer, polyethylene terephthalate, and polyamide, wherein:
- the ethylene vinyl alcohol copolymer is an ethylene vinyl alcohol copolymer resin having an ethylene content of 5 - 50 wt.-%, preferably 10 - 40 wt.-%, based on the weight of the copolymer and/or a residual ester content of not more than 5 wt.-%, preferably not more than 3 wt.-%, more preferably not more than 2 wt.-%, based on the weight of the copolymer resin and/or a homopolymer content of not more than 5 wt.-%, preferably not more than 3 wt.-%, more preferably not more than 2 wt.-%, based on the weight of the copolymer resin and

- the polyethylene terephthalate has a content of ethylene terephthalate units of at least 90 wt.-%, preferably at least 95 wt.-%, more preferably at least 97.5 wt.-%, based on the weight of the polyethylene terephthalate and/or a content of dioxyethylene terephthalate units of not more than 10 wt.-%, preferably not more than 5 wt.-%, more preferably not more than 2.5 wt.-%, based on the weight of the polyethylene terephthalate and
- the polyamide is an aromatic and aliphatic crystalline or a semi-crystalline homo polyamide or co-polyamide.

Suitable polyolefins and rubbers for use as the at least one polymer **P5** include the ones presented suitable for use in the polymer component **P1** of the first functional coating (3).

According to one or more embodiment, the at least one polymer **P5** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

According to one or more embodiments, the upper major surface of the first outer layer (6) facing away from the barrier layer (5) forms the first primary exterior surface of the polymeric carrier layer (2).

According to one or more embodiments, the multilayer foil further comprises a second outer layer (6') comprising at least one polymer **P6** selected from the group consisting of polyvinylchloride, polyolefins, halogenated polyolefins, rubbers, and ketone ethylene esters, wherein the barrier layer (5) is arranged between the first and second outer layers (6, 6'). According to one or more embodiments, the lower major surface of the second outer layer (6') facing away from the barrier layer (5) preferably forms the second primary exterior surface of the polymeric carrier layer (2).

Preferably, the at least one polymer **P6** comprises at least 35 wt.-%, preferably at least 55 wt.-%, more preferably at least 75 wt.-%, even more preferably at least 85 wt.-%, of the total weight of the second outer layer (6').

Suitable polyolefins and rubbers for use as the at least one polymer **P6** include the ones presented suitable for use in the polymer component **P1** of the first functional coating (3).

According to one or more embodiment, the at least one polymer **P6** comprises at least one thermoplastic polymer, preferably selected from the group consisting of polyvinylchloride, polyethylene, ethylene α-olefin copolymers, ethylene acrylic ester copolymers, and ethylene vinyl acetate copolymers, polypropylene, and propylene α-olefin copolymers, more preferably from the group consisting of polyethylene, ethylene α-olefin copolymers, ethylene acrylic ester copolymers, and ethylene vinyl acetate copolymers.

At least in embodiments where the barrier layer (5) comprises an ethylene vinyl alcohol or polyamide as the at least one polymer **P4,** a tie layer is preferably arranged between the barrier layer (5) and the first outer layer (6) as well as between the barrier layer (5) and the second outer layer (6'), in case present, to enable bonding of the barrier layer (5) to the first and second outer layers (6, 6') by using thermal lamination means.

Suitable polymers for use in the tie layer include, for example, maleic anhydride functionalized polyolefins, such as maleic anhydride grafted homopolymers and copolymers of ethylene and propylene.

According to one or more embodiments, the tie layer comprises at least one maleic anhydride grafted polyolefin, preferably selected from the group consisting of maleic anhydride grafted polyethylene and maleic anhydride grafted polypropylene.

Preferably, the at least one maleic anhydride grafted polyolefin comprises at least 35 wt.-%, preferably at least 50 wt.-%, more preferably at least 75 wt.-%, even more preferably at least 85 wt.-%, of the total weight of the tie layer.

Preferred thicknesses of the barrier layer (5) and first and second outer layers (6, 6') depend on the intended use of the sealing element.

According to one or more embodiments, the barrier layer (5) has a thickness of not more than 200 µm, more preferably not more than 150 µm, even more preferably not more than 100 µm. According to one or more embodiments, barrier layer (5) has a thickness in the range of 1 - 150 µm, preferably 2.5 - 125 µm, more preferably 5 - 100 µm, even more preferably 10 - 85 µm.

The thickness of the first and second outer layer (6, 6') is preferably not more than not more than 200 µm, more preferably not more than 150 µm, even more preferably not more than 100 µm. According to one or more embodiments, the first and second outer layers (6, 6') have a thickness in the range of 1 - 150 µm, preferably 2.5 - 125 µm, more preferably 5 - 100 µm, even more preferably 10 - 85 µm.

The polymers **P5** and **P6** are preferably selected to be compatible with the polymer components **P1** and **P2** of the first and second functional coatings (3, 3'), respectively.

By polymers being "compatible" is understood to mean that the properties of a blend composed, for example, of the at least one polymer **P5** and the polymers of the polymer component **P1,** are not inferior to those of the at least one polymer **P5** and the polymer component **P1.**

It may also be preferable that the at least one polymer **P5** is at least partially miscible with the polymer component **P1** and the at least one polymer **P6** is at least partially miscible with the polymer component **P2.** By the polymers being "miscible" is understood to mean that a polymer blend obtained by blending of polymers has a negative Gibbs free energy and heat of mixing. Polymer blends composed of entirely miscible polymers tend to have one single glass transition temperature, which can be measured using dynamic mechanical thermal analysis (DMTA). The glass transition temperature can be determined, for example, as the peak of the measured tan delta curve (ratio of storage and loss moduli).

According to one or more embodiments, the multilayer foil is a blown film. The term "blown film" refers to a film produced by the blown coextrusion process. In the blown coextrusion process, streams of melt-processed polymers are forced through an annular die having a central mandrel to form a tubular extrudate. The tubular extrudate may be expanded to a desired wall thickness by a volume of fluid, for example air or other gas, entering the hollow interior of the extrudate via the mandrel, and then rapidly cooled or quenched by any of various methods known to those of skill in the art.

In waterproofing applications, one of the important characteristics is the strength of adhesion by which a sealing element, such as a waterproofing membrane, is bonded to a substrate, for example a concrete surface, to be sealed against penetration of water. In case the strength of adhesion is too low, gaps are more easily formed between the membrane and the surface of the substrate, which may lead to loss of water tightness, particularly to loss of water tightness after infiltration. The term "watertightness after infiltration" describes the ability of the membrane to resist spreading of infiltrated water in the space between the membrane and the waterproofed surface and/or between individual layers of the membrane, after leakage in the membrane has occurred.

According to one or more embodiments, the sealing element exhibits a concrete adhesion strength of at least 5 N/50 mm, preferably at least 7.5 N/50 mm, more preferably at least 10 N/50 mm, determined as average peel resistance per unit width of the sealing element upon peeling the sealing element from a surface of a concrete specimen, which has been casted on the surface of a functional coating and hardened for 28 days under standard atmosphere (air temperature 23°C, relative air humidity 50%). The concrete adhesion strength is preferably measured using the method as described in the experimental part of the present disclosure.

The watertightness after infiltration of a sealing element can be determined using a modified watertightness measurement method, which is based on the method as defined in ASTM 5385M standard. In the modified watertightness measurement method, a hole with a diameter of 10 mm is punched to the sealing element, which is then adhered to a concrete slab. The watertightness of the punched sealing element is tested with the same type of apparatus as described in the original ASTM 5385 standard method. The water pressure inside the test apparatus is increased to a value between 0.25 and 7 bar and the test is continued for a specified time. At the end of the test, the concrete slab is removed from the test apparatus and at least part of the sealing element is peeled off from the concrete surface to determine, how far the water has invaded between the concrete surface and the sealing element and/or between different layers of the sealing element. In case only a small area, such as a circle with a diameter of 2.50 mm or less, near the hole is affected by water, the sealing element is considered to be watertight after infiltration according to ASTM 5385M standard.

According to one or more embodiments, the sealing element is watertight after infiltration according to ASTM 5385M, when the test is conducted at a pressure of 5 bars and continued for 7 days.

Still another subject of the present invention is use of the sealing element according to the present invention as a waterproofing membrane, gas barrier membrane, volatile organic compound (VOC) barrier membrane, vapor barrier membrane, vapor retarder membrane, roofing membrane, façade membrane, or as a geomembrane, preferably as a pre- or post-applied waterproofing, gas barrier, volatile organic compound (VOC) barrier, vapor barrier, or vapor retarder membrane, or as a façade or roofing membrane.

According to one or more embodiments, the use of the sealing element as a pre-applied waterproofing, gas barrier, or VOC barrier membrane comprises steps of:
I') Applying a sealing element according to the present invention to a surface of a substrate to be sealed such that the second primary exterior surface of the polymeric carrier layer is facing the surface of the substrate,
II') Casting a fresh concrete composition on a primary exterior surface of the first functional coating facing away from the polymeric carrier layer, and
III') Letting the fresh concrete composition to harden.

The term "fresh concrete composition" or "liquid concrete composition" designate concrete compositions before hardening, particularly before setting. The casted concrete composition after hardening can be part of a structure, in particular, an above-ground or underground structure, for example a building, garage, tunnel, landfill, water retention, pond, dike or an element for use in prefabricated constructions.

According to one or more embodiments, use of the sealing element as a post-applied waterproofing, gas barrier, volatile organic compound (VOC) barrier, vapor barrier, or vapor retarder membrane, or as a façade or roofing membrane comprises steps of:
I) Providing a sealing element according to the present invention,
II) Applying a layer of an adhesive on at least a portion of the surface of a substrate to be sealed,
III) Contacting the layer of adhesive with a primary exterior surface of the first functional coating facing away from the polymeric carrier layer.

The adhesive can be a fresh cementitious composition, or a synthetic resin-based adhesive composition, for example, a reactive epoxy-based, polyurethane-based, or acrylic-based adhesive composition, or a non-reactive thermoplastic-based adhesive composition, such as an acrylic dispersion adhesive, or rubber-based adhesive composition.

The term "cementitious composition" refers to concrete, shotcrete, grout, mortar, paste or a combination thereof. The terms "paste", "mortar", "concrete", "shotcrete", and "grout" are well-known terms in the State-of-the-Art. Pastes are mixtures comprising a hydraulic cement binder, usually Portland cement, masonry cement, or mortar cement. Mortars are pastes additionally including fine aggregate, for example sand. Concrete are mortars additionally including coarse aggregate, for example crushed gravel or stone. Shotcrete is concrete (or sometimes mortar) conveyed through a hose and pneumatically projected at high velocity onto a surface. The cementitious compositions can be formed by mixing required amounts of certain components, for example, a hydratable cement, water, and fine and/or coarse aggregate, to produce the particular cementitious composition. The term "fresh cementitious composition" refers to a cementitious composition before hardening of the composition.

The substrate to be sealed can be any above or below ground structure, which is to be sealed against water, harmful gases, or moisture such as a structure of a wet room, for example a shower room, a therapy room in a hospital, a balcony, terrace, tank, or a swimming pool. The substrate can be a concrete, fiber concrete, metal, or a plywood substrate, or it may include an insulation board or a cover board and/or an existing polymeric membrane.

According to one or more further embodiments, the use of the sealing element as a roofing membrane comprises steps of:
I") Providing a sealing element according to the present invention,
II") Applying a layer of an adhesive composition on at least a portion of the surface of the substrate to be sealed to form a first adhesive film and on a first primary exterior surface of the first functional coating to form a second adhesive film,
III") Contacting the first and second adhesive films with each other to effect adhesive bonding between the substrate and the sealing element.

The adhesive composition used in this these embodiments is preferably a solvent- or water-based contact adhesive, such as a solvent- or water-based acrylic adhesive. Suitable solvent- and water-based contact adhesives are commercially available, for example, under the trade name of Sarnacol^{®} (from Sika AG).

### Examples

The materials shown in Table 1 were used in the examples.

**Table 1. Materials used in the experiments**

| | |
|---|---|
| P11 | Ethylene vinyl acetate copolymer with 18 wt.-% of vinyl acetate, MFI 150 g/10min (190°C/2.16kg), melting range 90 - 95 °C |
| P12a | Ethylene vinyl acetate copolymer with 70 wt.-% of vinyl acetate, Mooney viscosity (ML (1+4) 100 °C) 25-30 |
| P12b | Ethylene vinyl acetate copolymer with 14 wt.-% of vinyl acetate, MFI 2.5 g/10min (190°C/2.16kg), melting range 90 - 95 °C |
| P12b' | Ethylene vinyl acetate copolymer with 28 wt.-% of vinyl acetate, MFI 2.5 g/10min (190°C/2.16kg), melting range 70 - 75 °C |
| Filler 11 | Cement, CEM II/B-M (T-LL) 52,5 N SN EN 197-1 cement |
| Additives | Thermal stabilizer, hindered amine light stabilizer, color pigment |

### Preparation of sealing elements

The exemplary sealing element were prepared by strewing one or more particle-based compositions ("PBCs") composed of one or more different types of compounded particles ("granulates") to the surface of a polymeric carrier layer. The following procedure was used in producing the sealing elements.

Sealing elements according to Ex-5 and Ex-6 were prepared by using a one-step strewing process. The polymeric carrier layer was first positioned on a wooden board having dimensions of 25 x 50 cm. A particle-based composition was then strewed to the surface of the carrier layer using a hand-held sieve. The particle coated carrier layer was then heat-treated in an oven at a temperature of 120 °C for 12-15 minutes. The comparative sealing element according to Ref-1 was prepared using the same process as for Ex-5 and Ex-6 but the particle coated carrier layer was heated only for 10 minutes in the oven.

Sealing elements according to Ex-1 to Ex-4 were prepared by using a two-step strewing process, in which a first particle-based composition was strewn to the surface of the carrier layer using a hand-held sieve followed by strewing a second particle-based composition on top of the first strewn layer. The carrier layer having two strewn layers on its surface was then then heat-treated in an oven at a temperature of 120 °C for 12-15 minutes.

The compositions of the granulates and particle-based compositions are shown in Tables 2 and 3, respectively. Based on microscopy analysis (scanning Electron Microscopy with Energy Dispersive X-Ray Analysis), a portion of the cement particles contained in the granulates 2 and 3 was found to be only partially embedded into the outer surface of the granules.

The polymeric carrier layer was a multilayer foil composed of multiple layers having a total thickness of 200 µm. The multilayer foil consisted of a core layer of polyamide and two outer layers of LDPE and it is commercially available from Loparex GmbH (yellow foil, quality 74930).

The strewing rates of the particle-based compositions and the peel strengths obtained with the prepared sealing elements are presented in Table 4.

**Table 2: granulates**

| **Compositions [wt.-%]** | **Granulate 1** | **Granulate 2** | **Granulate 3** |
|---|---|---|---|
| P11 | 100.00 | 0.00 | 0.00 |
| P12a | 0.00 | 25.39 | 35.31 |
| P12b | 0.00 | 9.58 | 8.30 |
| P12b' | 0.00 | 16.76 | 14.53 |
| F11 | 0.00 | 47.89 | 41.52 |
| Additives | 0.00 | 0.38 | 0.34 |
| Total | 100.00 | 100.00 | 100.00 |
| D₅₀ particle size [µm] | 400 | 390 | 890 |

**Table 3: particle-based compositions**

| **Compositions [wt.-%]** | **PBC1a** | **PBC2a** | **PBC2b** | **PBC1b** |
|---|---|---|---|---|
| Granulate 1 | 100.00 | | | 50.00 |
| Granulate 2 | | 100.00 | | 50.00 |
| Granulate 3 | | | 100.00 | |
| Total | 100.00 | 100.00 | 100.00 | 100.00 |

### Preparation of the concrete test specimen

Three sample strips with a dimension of 200 mm (length) x 50 mm (width) were cut from each of the tested sealing elements prepared as described above. The sample strips were placed into formworks having a dimension of 200 mm (length) x 50 mm (width) x 30 mm (height) with the functional coating facing upwards and with the second primary exterior surface of the polymeric carrier layer against the bottom of the formwork.

One edge of each sample strip on the side of the functional coating was covered with an adhesive tape having a length of 50 mm and width coinciding with the width of the strip to prevent the adhesion to the hardened concrete. The adhesive tapes were used to provide easier installation of the test specimens to the peel resistance testing apparatus.

For the preparation of concrete specimens, a batch of fresh concrete formulation was prepared. The fresh concrete formulation was obtained by mixing 8.9900 kg of a concrete dry batch of type MC 0.45 conforming to EN 1766 standard, 0.7553 kg of water and 0.0202 kg of Sikament-12S for five minutes in a tumbling mixer. The concrete dry batch of type MC 0.45 contained 1.6811 kg of CEM I 42.5 N cement (Normo 4, Holcim), 7.3089 kg of aggregates containing 3% Nekafill-15 (from KFN) concrete additive (limestone filler), 24% sand having a particle size of 0-1 mm, 36% sand having a particle size of 1-4 mm, and 37% gravel having a particle size of 4-8 mm. Before blending with water and Sikament-12S the concrete dry batch was homogenized for five minutes in a tumbling mixer.

The formworks containing the sample strips were subsequently filled with the fresh concrete formulation and vibrated for two minutes to release the entrapped air. After hardening for 12 hours, the test concrete specimens were stripped from the formworks and stored under standard atmosphere (air temperature 23°C, relative air humidity 50%) for 36 hours, 7 days, or 28 days before measuring the peel resistances.

### Concrete adhesion strength

The measurement of peel resistances was conducted in accordance with the procedure laid out in the standard DIN EN 1372:2015-06. A Zwick Roell AllroundLine Z01 0 material testing apparatus equipped with a Zwick Roell 90°-peeling device (type number 316237) was used for conducting the peel resistance measurements.

In the peel resistance measurements, a concrete specimen was clamped with the upper grip of the material testing apparatus for a length of 10 mm at the end of the concrete specimen comprising the taped section of the sample strip. Following, the strip was peeled off from the surface of the concrete specimen at a peeling angle of 90 ° and at a constant cross beam speed of 100 mm/min. During the measurements the distance of the rolls was approximately 570 mm. The peeling of the sample strip was continued until a length of approximately 140 mm of the strip was peeled off from the surface of the concrete specimen. The values for peel resistance were calculated as average peel force per width of the sample strip [N/ 50 mm] during peeling over a length of approximately 70 mm thus excluding the first and last quarter of the total peeling length from the calculation.

The average peel resistance values presented in Table 4 have been calculated as an average of three measurements conducted with the same sealing element.

### Watertightness after infiltration

The ability of a sealing element to resist lateral water migration after infiltration was determined using a modified watertightness measurement method based on the ASTM 5385M standard. In the modified watertightness measurement, a circular hole having a diameter of 10 mm was punched to the tested sealing element, which had been adhered to a concrete slab. The watertightness of the punched sealing element was determined using a same type of apparatus as described in the original ASTM 5385 standard method. The water pressure inside the test apparatus was increased to a value of 5 bar and the test was continued for seven days. At the end of the test period, the concrete slab was removed from the test apparatus and at least part of the tested sealing element was peeled off from the concrete surface. The length of the path water had invaded (migrated) between the surface of the concrete slab and the sealing element and/or between different layers of the sealing element was recorded as the "lateral water migration".

**Table 4**

| **Strewing rate [g/m²]** | **Ref-1** | **Ex-1** | **Ex-2** | **Ex-3** | **Ex-4** | **Ex-5** | **Ex-6** |
|---|---|---|---|---|---|---|---|
| PBC1a | 70 | 70 | 50 | 70 | 50 | - | - |
| PBC2a | - | 130 | 70 | - | - | - | - |
| PBC2b | - | - | - | 130 | 70 | - | - |
| PBC1b | - | - | - | - | | 200 | 120 |
| Peel resistance N/50 mm] | | | | | | | |
| after 36 hours | 2 | 20 | 11 | 21 | 12 | 5 | 4 |
| after 7 days | 2 | 32 | 16 | 38 | 17 | 8 | 5 |
| after 28 days | 2 | 37 | 19 | 43 | 30 | 14 | 8 |
| Lateral water migration | | 0 cm | | 2 cm | | | |

## Claims

1. A method for producing a sealing element comprising a polymeric carrier layer having a first and a second primary exterior surfaces and a first functional coating covering at least a portion of the first primary exterior surface of the polymeric carrier layer, wherein the first functional coating comprises a polymer component **P1** and a solid filler component **F1,** wherein the first functional coating is formed by strewing one or more particle-based compositions and subjecting at least one of the strewn layer(s) to a heat-treatment.

2. The method according to claim 1, wherein at least one of the particle-based compositions used in forming the first functional coating is composed of particles comprising at least one constituent of the polymer component **P1** and at least one constituent of the solid filler component **F1.**

3. The method according to claim 1 or 2, wherein the first functional coating comprises:
a1) 25 - 90 wt.-%, preferably 35 - 85 wt.-%, of the polymer component **P1** and
b1) 5 - 70 wt.-%, preferably 10 - 60 wt.-%, of the solid filler component **F1,** all proportions being based on the total weight of the first functional coating.

4. The method according to any one of previous claims, wherein the sealing element further comprises a second functional coating covering at least a portion of the second primary exterior surface of the polymeric carrier layer, wherein the second functional coating comprises a polymer component **P2** and a solid filler component **F2,** wherein the second functional coating is formed by strewing one or more particle-based compositions and subjecting at least one of the strewn layers to a heat-treatment.

5. The method according to any one of previous claims, wherein the particle-based composition(s) are in form of powder, pellets, or granules, preferably having a median particle size dso of 50 - 1500 µm, preferably 100 - 1000 µm.

6. The method according to any one of previous claims comprising steps of:
i) Strewing a first particle-based composition comprising at least one thermoplastic polymer **P11** to the first primary exterior surface of the polymeric carrier layer to form a first strewn layer,
ii) Optionally subjecting the first strewn layer to a heat treatment,
iii) Strewing a second particle-based composition comprising at least one thermoplastic polymer **P12** and at least one inorganic filler **F11** on top of the first strewn layer to form a second strewn layer, and
iv) Subjecting the second strewn layer to a heat-treatment.

7. The method according to claim 6, wherein the first particle-based composition is substantially free of the at least one inorganic filler **F11,** preferably substantially free of inorganic fillers.

8. The method according to claim 6 or 7, wherein the second particle-based composition is composed of compounded particles comprising the at least one thermoplastic polymer **P12** and the at least one inorganic filler **F11.**

9. The method according to any one of claims 6-8, wherein the at least one thermoplastic polymer **P11** comprises at least one ethylene vinyl acetate copolymer, preferably having a content of a structural unit derived from vinyl acetate of 5 - 65 wt.-%, more preferably 10 - 50 wt.-%, based on the weight of the copolymer.

10. The method according to any one of claims 6-9, wherein the at least one thermoplastic polymer **P12** comprises at least one soft ethylene vinyl acetate copolymer having a content of a structural unit derived from vinyl acetate of 45 - 90 wt.-%, preferably 50 - 90 wt.-%, based on the weight of the copolymer.

11. A sealing element (1) comprising a polymeric carrier layer (2) having an upper and a lower primary exterior surface and a first functional coating (3) covering at least a portion of the first primary exterior surface of the polymeric carrier layer (2), wherein the first functional coating (3) comprises a polymer component **P1** and a solid filler component **F1** and wherein the first functional coating (3) has been obtained by strewing one or more particle-based compositions and subjecting at least one of the strewn layer(s) to a heat-treatment.

12. The sealing element (1) according to claim 11, wherein the first functional coating (3) comprises a first polymer matrix (4) comprising the polymer component **P1** and wherein a portion of the particles of the solid filler component **F1** are only partially embedded into the first polymer matrix (4).

13. The sealing element (1) according to claim 11 or 12, wherein at least one of the particle-based compositions used for obtaining the first functional coating comprises at least one constituent of the polymer component **P1** and at least one constituent of the solid filler component **F1.**

14. The sealing element (1) according to any one of claims 11-13, wherein the first functional coating (3) comprises:
a1) 25 - 90 wt.-%, preferably 35 - 85 wt.-%, of the polymer component **P1** and
b1) 5 - 70 wt.-%, preferably 10 - 60 wt.-%, of the solid filler component **F1,** all proportions being based on the total weight of the first functional coating (3).

15. The sealing element (1) according to any one of claims 11-14 further comprising a second functional coating (3') covering at least a portion of the second primary exterior surface of the polymeric carrier layer (2), wherein the second functional coating (3) comprises a polymer component **P2** and a solid filler component **F2** and wherein the second functional coating (3) has been obtained by strewing one or more particle-based compositions and subjecting at least one of the strewn layer(s) to a heat-treatment.

16. The sealing element (1) according to any one of claims 11-15, wherein the polymeric carrier layer (2) is a multilayer foil comprising a barrier layer (5) comprising at least one polymer **P4** selected from the group consisting of ethylene vinyl alcohol, polyamide, and polyester and a first outer layer (6) comprising at least one polymer **P5** selected from the group consisting of polyvinylchloride, polyolefins, halogenated polyolefins, and ketone ethylene esters.

17. The sealing element (1) according to claim 16, wherein multilayer foil further comprises a second outer layer (6') comprising at least one polymer **P6** selected from the group consisting of polyvinylchloride, polyolefins, halogenated polyolefins, and ketone ethylene esters, wherein the barrier layer (5) is arranged between the first and second outer layers (6, 6').

18. Use of the sealing element according to any one of claims 11-17 as a waterproofing membrane, gas barrier membrane, volatile organic compound (VOC) barrier membrane, vapor barrier membrane, vapor retarder membrane, façade membrane, roofing membrane, or as a geomembrane.
